# EUROPEAN PATENT SPECIFICATION

(11) **EP 0 930 787 B1**
(45) Date of publication and mention of the grant of the patent: **20.02.2008**
(21) Application number: 98124450.2
(22) Date of filing: 23.12.1998
(51) Int. Cl.: H04N 7/26, H04N 7/28, H04N 1/411

(54) **Image coding apparatus using pattern coding**
Bildkodierungsvorrichtung unter Anwendung von Bildmusterkodierung
Appareil de codage d'image utilisant des motifs de codage

(30) Priority: 26.12.1997 JP 35990097
(43) Date of publication of application: 21.07.1999
(73) Proprietor: NEC CORPORATION, Tokyo (JP)
(72) Inventor: Hirao, Kouichirou c/o NEC Corporation, Minato-ku, Tokyo (JP)
(74) Representative: Vossius & Partner

(56) References cited:
- US-A- 4 606 069
- US-A- 4 853 970
- US-A- 5 539 842
- HOWARD P G: "LOSSLESS AND LOSSY COMPRESSION OF TEXT IMAGES BY SOFT PATTERN MATCHING" ISO/IEC JTC 1/SC 29/WG 1, N 205, 30 June 1995 (1995-06-30), pages 1-29, XP000858176 Milpitas, CA, US
- QIN ZHANG ET AL: "A pattern-based lossy compression scheme for document images" SIXTH INTERNATIONAL CONFERENCE ON ELECTRONIC PUBLISHING DOCUMENT MANIPULATION AND DOCUMENT DISSEMINATION, PALO ALTO, CA, USA, 24-26 SEPT. 1996, vol. 8, no. 2-3, pages 221-233, XP002246353 Electronic Publishing: Origination, Dissemination and Design, June-Sept. 1995, Wiley, UK ISSN: 0894-3982
- WITTEN I H ET AL: "TEXTUAL IMAGE COMPRESSION: TWO-STAGE LOSSY/LOSSLESS ENCODING OF TEXTUAL IMAGES" PROCEEDINGS OF THE IEEE, IEEE. NEW YORK, US, vol. 82, no. 6, 1 June 1994 (1994-06-01), pages 878-888, XP000438338 ISSN: 0018-9219

## Description

The present invention relates to image data coding and, more particularly, to an image coding apparatus, storage medium for storing the program for processing the coding and an image coding method which reduce the amount of coding through pattern matching coding.

Conventionally, pattern matching coding has been used for coding binary still images. An apparatus using pattern matching coding first divides an image into patterns, each composed either of a collection of connected graphics-like black picture cells or of a character, and then performs matching processing on each pattern. After that, using the matching processing result, the apparatus performs arithmetic coding on bit-map pattern data as well as on pattern position and size data on each pattern. During arithmetic coding, the apparatus uses the elements surrounding a picture element, which is to be coded, as reference picture elements to predict whether or not the picture element is black or white. To increase the hit ratio, the apparatus uses the picture elements of a matching pattern of an input image as the reference picture elements, making pattern matching coding one of the best coding methods with a high compression ratio (The matching pattern is the one produced as a result of matching).

U.S. Patent No. 5,303,313 discloses a pattern matching coding method which performs pattern matching as follows. The method first extracts a pattern (input pattern), called a symbol, from an input image. It then matches the input pattern with one of library patterns, also called templates, which were stored in the library during extraction or coding performed before. Upon detecting a library pattern matching the input pattern, the input pattern is coded by referencing that library pattern. The pattern matching coding method performs coding by referencing the patterns stored in the library while adding new patterns to the library patterns for use in later coding. This means that repeated coding processing further optimizes the library patterns.

Another image compression method using pattern matching is proposed in "Looseless and Lossy Compression of Test/Images by Soft Patterns Matching" by Paul G. Howard (AT&T Bell Laboratories), ISO/IEC JTC 1/SC 29/WGI N205, pp. 1-29, June 30, 1995. This image compression method, primarily intended for coding binary image data containing character images, uses pattern matching. The method first extracts characters from the image, one character at a time, using known methods such as boundary tracing (Extracted images are called patterns.) The method then compares each pattern with character image data patterns prepared in advance (hereafter called a library) and, if it finds a matching character image data pattern in the library, the matching character image data pattern is referenced by a coder during pattern coding. When the method extracts a pattern and references the library, it moves a template, an area composed of dozens of picture elements, through the pattern and the library to generate sequentially code data from the coder.

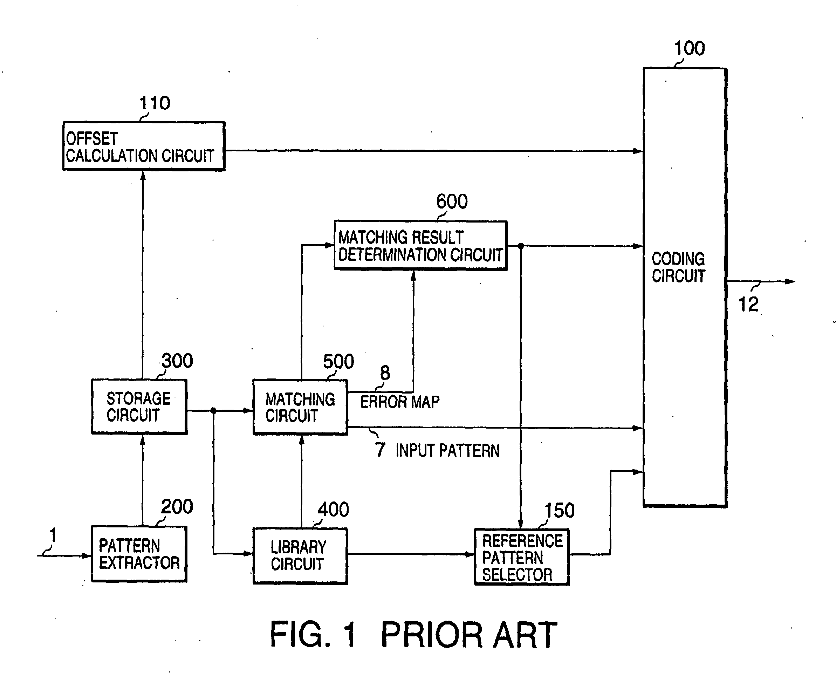

FIG. 1 is a block diagram showing an image coding apparatus using the above mentioned pattern coding method. A binary still image 1, which is to be coded, is divided into patterns and is sequentially extracted by a pattern extractor 200. Two known pattern extraction methods are a boundary trace method and a projection division method. The boundary trace method traces the boundary of a block of black picture elements and extracts the image within the boundary. The projection division method counts the numbers of horizontal black picture elements and vertical black picture elements, divides the image horizontally and vertically based on the result, and extracts a character-based pattern while repeating a process similar to that of the boundary trace method. The pattern extracted by the pattern extractor 200 is used as the input pattern in the subsequent processing. Extracted input patterns are stored, one at a time, in a storage circuit 300. The storage circuit 300 contains bit-map data of the extracted patterns as well as pattern size data and pattern coordinate data.

A library 400 is a memory containing reference patterns to be used during matching processing. Initially, it contains no data. A new input pattern, when extracted, is added to the library 400 for later use as a reference pattern. In this way, the library 400 gets new input patterns and, at the same time, updates its contents based on input pattern priorities because its size is limited. More specifically, the library 400 increases the priority of frequently-used patterns and deletes low-priority patterns.

A matching circuit 500 matches each of input patterns in the storage circuit 300 with a reference pattern in the library 400. To do so, the matching circuit 500 selects from the library 400 a reference pattern approximately as large as an input pattern from the storage circuit 300. It then matches the selected reference pattern with the input pattern. The reference pattern is sent from the library 400 to a reference pattern selector 150.

The matching circuit 500 matches each of the positions of the input pattern with the corresponding position of the reference pattern, and calculates the exclusive OR of the picture element value of the input pattern at that position and the picture element value of the reference pattern at that position. This calculation produces an error map 8, each entry of which indicates whether the value of the input pattern at a position matches the value of the reference pattern ("0") at the position or not ("1").

A matching result determination circuit 600 calculates the ratio of the number of errors to the size of the error map generated by the matching circuit 500. If the ratio is smaller than a specific threshold, the matching result determination circuit 600 determines that the input pattern and the reference pattern match (matched condition); otherwise, it determines that the two patterns do not match (unmatched condition).

When the matching result determination circuit 600 generates a matched condition, the reference pattern selector 150 sends the reference pattern from the library 400 to a coding circuit 100.

Based on the matching result of the matching result determination circuit 600, the coding circuit 100 codes the input pattern 7 using, in most cases, the arithmetic coding method. The arithmetic coding method, described in ISO/IEC IS11544, compresses images efficiently through matching prediction.

For the input pattern 7 for which the matching result determination circuit 600 has generated an unmatched condition, the coding circuit 100 performs normal arithmetic coding. In this case, to predict whether the picture element to be coded is white or black, the coding circuit 100 uses, as the reference picture elements, several picture elements around the picture element to be coded. On the other hand, for the input pattern 7 for which the matching result determination circuit 600 has generated a matched condition, the coding circuit 100 performs arithmetic coding which uses the reference picture element containing the picture element to be coded and the picture elements around it which are located in the reference pattern. This ensures a high hit ratio and efficient compression. Thus, only when the matching result determination circuit 600 has generated a matched condition, the reference pattern selector 150 sends the reference pattern to the coding circuit 100 for coding. The coding circuit 100 performs arithmetic coding not only on the bit-map data of the input pattern but also on the pattern size and the pattern coordinates with the use of the distance from the previous pattern detected by an offset calculation circuit 110.

Thus, regardless of the matching determination result, it may be said that the pattern coding method always performs arithmetic coding on an extracted input pattern. This is because, even if the reference picture elements are extracted from a reference pattern when the matching result determination circuit 600 has generated a matched condition, the reference pattern is also data received in the past as an input pattern. This means that, even when there are many input patterns matching reference patterns stored in the library 400, coding efficiency is not increased. HOWARD P G LOSSLESS AND LOSSY COMPRESSION OF TEXT IMAGES BY SOFT PATTERN MATCHING'ISO/IEC JTC 1/SC 29:WG 1, N 205, 30 June 1995 (1995-06-30), pages 1-29, XP000858176 Milpitas, CA, US,discloses an image coding apparatus according to the preamble of claim 1.

It is an object of the present invention to provide an image coding apparatus which increases the compression efficiency of an input pattern, determined as matched as a result of matching and, therefore, increases the compression efficiency of the whole image. This object is achieved with the features of the claims. The image coding apparatus according to the present invention matches an input pattern, extracted from binary still images to be coded, with a reference pattern stored in a library to generate an error map. The image coding apparatus then codes the error map, instead of the input pattern, thus increasing the compression ratio of coding.

A matching processing circuit matches the input pattern from a pattern storage circuit with the reference pattern from the library circuit. Based on the determination result of a matching result determination circuit, a selector selects input to a coding circuit. That is, when the matching result determination circuit has determined that the input pattern and the reference pattern do not match, the selector selects the input pattern as input to the coding circuit for coding; when the matching result determination circuit has determined that the input pattern and the reference pattern match, the selector selects the error map as input to the coding circuit for coding. In the latter case, the coding circuit codes only the difference between the input pattern and the reference pattern, thus increasing the compression ratio of the pattern and therefore increasing the compression ratio of the whole image.
FIG. 1 is a block diagram showing an example of a conventional coding apparatus;
FIG. 2 is a block diagram showing an example of a coding apparatus;
FIG. 3 is a diagram showing an example of an input pattern;
FIG. 4 is a diagram showing an example of a reference pattern;
FIG. 5 is a diagram showing an example of an error map;
FIG. 6 is a block diagram showing an embodiment of the coding apparatus according to the present invention;
FIG. 7 is a diagram showing an image that has been changed by the embodiment;
FIG. 8 is a block diagram showing another example of a coding apparatus; and
FIGs. 9A and 9B are block diagrams showing coded data.

The embodiment of the present invention will be described with reference to the attached drawings.

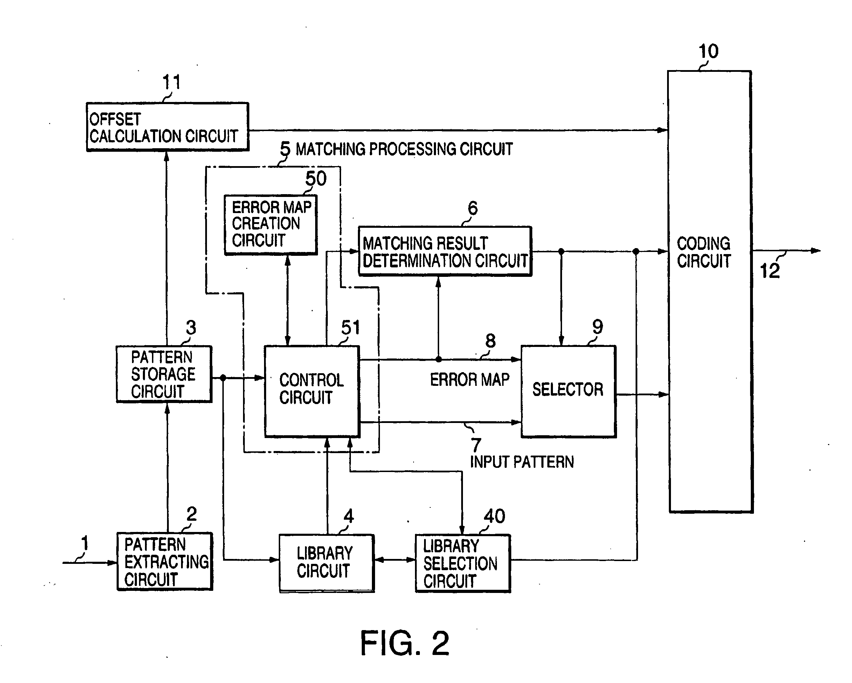

FIG. 2 is a block diagram showing an example of an image coding apparatus. Referring to FIG. 2, the pattern extracting circuit 2 extracts patterns from the received image 1 and outputs the extracted patterns to a pattern storage circuit 3, one at a time. To extract a pattern, the pattern extracting circuit 2 may use any of the boundary trace method, projection division method, and so on. The pattern extracting circuit 2 outputs the bit-map data on the extracted pattern, as well as the pattern size and pattern coordinates data, to the pattern storage circuit 3. The pattern storage circuit 3 is a memory in which extracted patterns and other data such as size and coordinate data are stored.

A library circuit 4 is a reference pattern storage circuit in which reference patterns to be used during pattern matching are stored. The contents of the library circuit 4 are updated by a control circuit 51 with a newly-extracted pattern from the storage circuit 3 or updated according to a matching determination result which will be described later. Under the control of the controlling circuit 51, the library circuit 4 further stores an index number of each of the reference patterns and the pattern size of each of the reference patterns. The pattern size is size data of horizontal and vertical sizes of each of the reference patterns

A library selection circuit 40 selects a reference pattern to be sent from the library circuit 4. A matching processing circuit 5, in conjunction with a matching result determination circuit 6, constitutes a matching circuit.

The matching circuit detects a matching condition by checking if the library circuit 4 contains the reference pattern similar to the input pattern, and generates a matching determination result indicating an unmatched result when the library circuit 4 contains no such pattern and a matching result when the library circuit 4 contains such the pattern.

More, definitely, the matching processing circuit 5 has an error map creation circuit 50 and a control circuit 51. The error map creation circuit 50, under control of the control circuit 51, matches an extracted input pattern selected from the pattern storage circuit 3 with a reference pattern selected from the library selection circuit 40 on a bit-by-bit basis. It then creates an error map containing information on the difference between the two patterns. The control circuit 51 in the matching processing circuit 5 outputs the input pattern 7 used in pattern matching and the error map 8 created during pattern matching at the same time. The control circuit 51 outputs the error map 8 also to the matching result determination circuit 6.

The matching result determination circuit 6 checks the result of pattern matching executed by the matching processing circuit 5; that is, it checks the error map 8 to determine whether or not the input pattern matches the reference pattern. The matching result determination circuit 6 sends the determination result to a selector 9, a coding circuit 10, and the library circuit 4.

The selector 9 selects the input pattern 7 or the error map 8 sent from the matching processing circuit 5 according to the determination result of the matching result determination circuit 6, and outputs the selected one to the coding circuit 10. That is, the selector 9 outputs the input pattern 7 when the determination result is an unmatched result, while it outputs the error map 8 when the determination result is a matched condition.

An offset calculation circuit 11 uses the size and coordinates of each pattern stored in the pattern storage circuit 3 to calculate the distance between the current pattern and the previous pattern.

The coding circuit 10 performs arithmetic coding to code data sent from the selector 9 and the offset data corresponding to the pattern. The result of the coding circuit 10 is coded data 12.

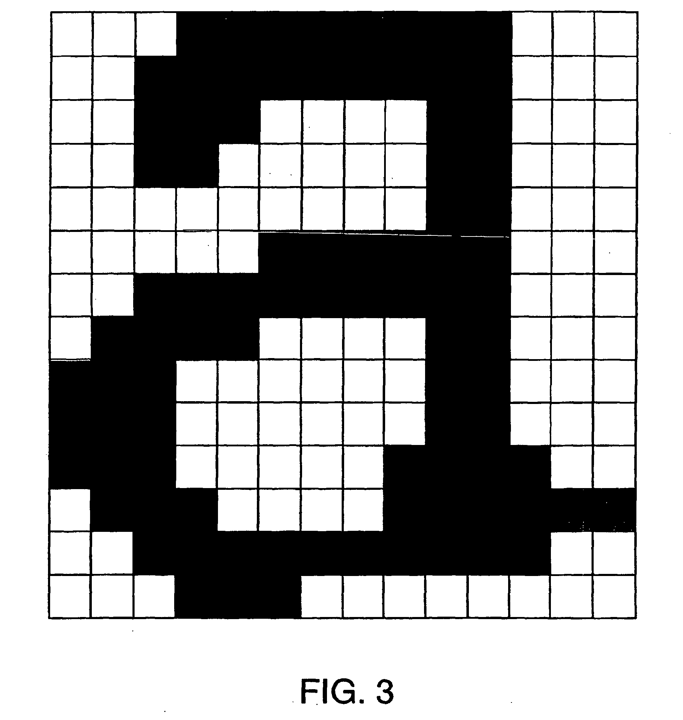

The following describes how the image coding apparatus shown in FIG 2 operates. The pattern extracting circuit 2 extracts patterns, one at a time, from the image 1 it has received. FIG. 3 shows an example of an extracted pattern. The pattern extracting circuit 2 may use any pattern extraction method such as the boundary trace method or the projection division method. The boundary trace method traces the boundary of a block of black picture elements and extracts the image within the boundary. The projection division method counts the numbers of horizontal black picture elements and vertical black picture elements, divides the image horizontally and vertically based on the result, and extracts patterns while repeating the division.

The pattern extracting circuit 2 outputs the bit-map data of the extracted pattern. It also measures and calculates the pattern size and pattern coordinates. The data produced by the pattern extracting circuit 2 is stored in the pattern storage circuit 3.

An extracted pattern and the pattern size data stored in the pattern storage circuit 3 is sent to the matching processing circuit 5 for use as the input pattern (including the pattern size data). When the control circuit 51 of the matching processing circuit 5 receives the input pattern, it instructs the library selection circuit 40 to select a reference pattern from the pattern library stored in the library circuit 4 and matches the selected reference pattern with the input pattern received from the pattern storage circuit 3. The library circuit 4 contains character data, such as "a", "b", "c", or "file", for use in matching with the input pattern.

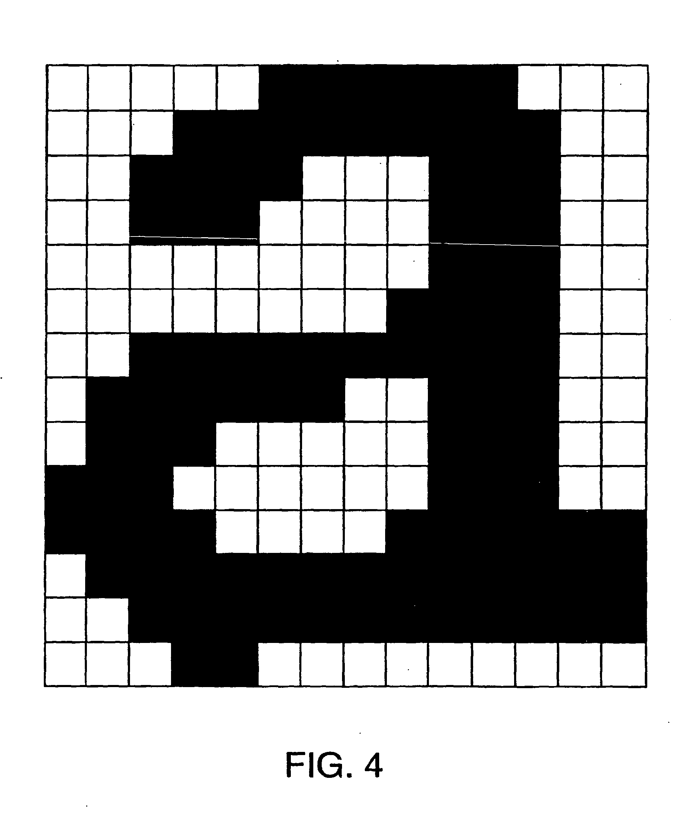

The library selection circuit 40 selects from the library circuit 4 a pattern that is equal to the input pattern in the horizontal and vertical sizes or which is one picture element larger or smaller than the input pattern in the horizontal and vertical sizes. To select the size approximately equal to the input pattern, the sizes of the input pattern is informed to the library selection circuit 40 from the control circuit 51. FIG. 4 shows an example of a reference pattern that the library selection circuit 40 will select when the input pattern shown in FIG. 3 is sent to the matching processing circuit 5.

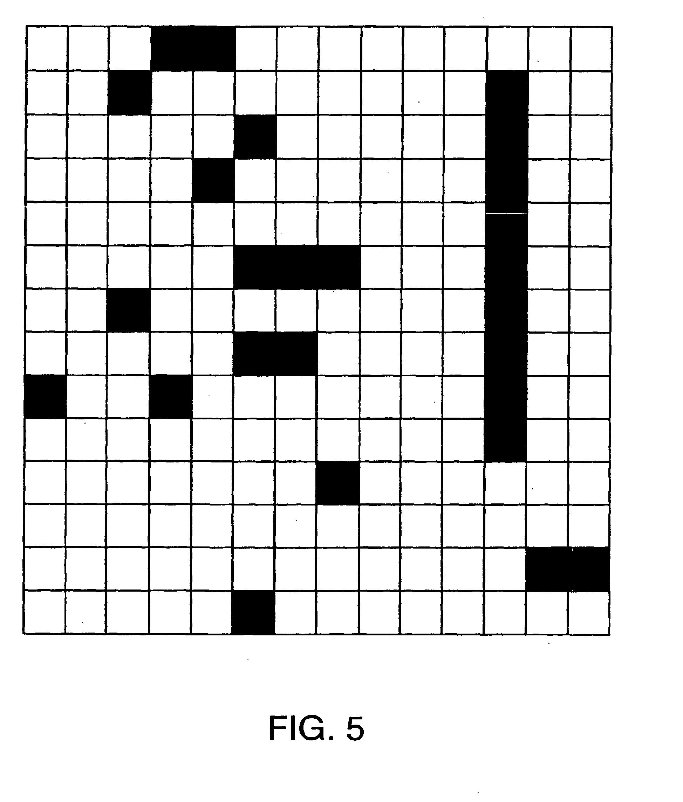

With the pattern shown in FIG. 4 as the reference pattern, the control circuit 51 of the matching processing circuit 5 sends an instruction to the error map creation circuit 50. Upon receiving the instruction, the error map creation circuit 50 matches the coordinates of the input pattern with those of the reference pattern, calculates the exclusive OR of each pair of corresponding picture elements and, based on the calculation results, generates an error map. The value of the picture element at a position within the error map is "1" when the picture element at the corresponding position within the input pattern does not match the picture element at the corresponding position within the reference pattern; the value is "0" when the corresponding two picture elements match. Therefore, the error map shows the difference between the input pattern and the reference pattern. FIG. 5 shows an error map generated as the result of matching the input pattern in FIG. 3 with the reference pattern in FIG. 4. In Fig. 5, error picture elements are black.

If the library selection circuit 40 selects two or more reference patterns having the size approximately equal to the input pattern, the error map creation circuit 50 generates error maps of the selected reference patterns. Then, the error map creation circuit 50 selects an error map having the least error picture elements among the error maps.

The matching processing circuit 5 outputs the error map created by the error map creation circuit 50 to the matching result determination circuit 6 and the selector 9. The error map 8 transferred to the selector 9 has the error maps generated by the error map creation circuit 50, the index number of the reference pattern which is used for generating the error map, and the pattern size of the reference pattern. On the other hand, the input pattern 7 transferred to the selector 9 has the input pattern and the size of the input pattern.

The matching result determination circuit 6, started by an instruction from the control circuit 51, checks the error map 8 to determine whether the input pattern and the reference pattern match. This determination is made in the following sequence. First, when the library selection circuit 40 cannot select from the library circuit 4 a pattern approximately equal in size to the input pattern (meaning that a pattern of the equal size is not in the library circuit 4), the matching processing circuit 5 sends a signal to the matching result determination circuit 6 indicating an unmatched condition. Then, the matching result determination circuit 6 determines that the input pattern and the reference pattern do not match. Next, when there is a reference pattern approximately equal in size to the input pattern, the control circuit 51 sends an instruction to the matching result determination circuit 6. Upon receiving this instruction, the matching result determination circuit 6 checks the error map 8, sent from the matching processing circuit 5, to determine whether a matched condition or an unmatched condition occurs. To do so, the matching result determination circuit 6 counts error picture elements (containing "1"), calculates the error ratio which is the ratio of errors to the error map size, and checks if the calculated error ratio is larger or smaller than a specific threshold. If the error ratio is larger, an unmatched condition occurs; if the error ratio is smaller, a matched condition occurs. When the unmatched condition occurs, the library circuit 4 stores the input patterns as a new reference pattern.

The selector 9 selects the input pattern 7, such as the one shown in FIG. 3, when the matching determination result from the matching result determination circuit 6 is an unmatched condition; on the other hand, it selects the error map 8, such as the one shown in FIG. 5, when the matching determination result is a matched condition. That is, in the former case, the selector 9 outputs the input pattern 7 to the coding circuit 10 for coding the input pattern 7 itself; in the latter case, the selector 9 sends the error map 8 to the coding circuit 10 for coding the error map 8.

The offset calculation circuit 11 uses pattern size data and pattern coordinate data, stored in the pattern storage circuit 3, to calculate the distance (offset) from the previous input pattern.

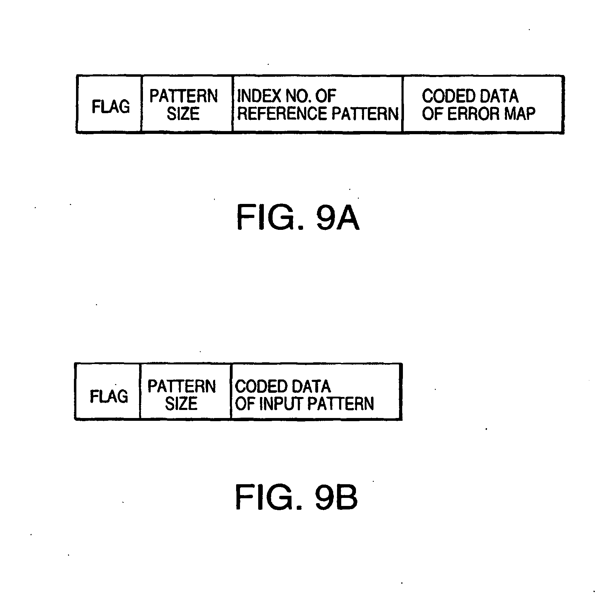

The coding circuit 10 codes the input pattern 7 or the error map 8 through arithmetic coding. It also codes the offset corresponding to the input pattern 7 or the error map 8. Fig. 9A shows first coded data of the coded data 12 which is generated when the error map 8 is coded, and Fig. 9B shows second coded data of the coded data 12 which is generated when the input pattern 7 is coded. In Fig. 9A, the first data is constructed by a flag indicating the match condition, the pattern size of the reference pattern included in the error map 8, the index number of the reference pattern included in it, and the error coded data. In Fig. 9B, the second data is constructed by a flag indicating the unmatch condition, the pattern size of the input pattern included in the input pattern 7 and coded input pattern data.

The image coding processing is performed as described above. To decode a pattern of the coded data 12, a decoder is used. The decoder (not shown) decodes the first coded data in Fig. 9A as follows. First, the decoder generates the reference pattern by using the index number of the reference pattern by using the index number of the reference pattern in the first coded data. In this case, the decoder reads a memory (not shown) storing the reference patterns with respect to the index numbers. Second, the decoder decodes the coded error map data to generate a decoded error map by using the pattern size in the first coded data. Third, the decoder decodes a pattern by mixing the decoded error map and the reference pattern generated. Further, the decoder decodes the second coded data in Fig. 9B by decoding the coded input pattern data and the size of the input pattern.

The advantage of the embodiment is that it increases the compression efficiency of an input pattern when the library circuit 4 has a reference pattern matching the input pattern. This also means an improvement in the compression efficiency of the whole image.

The conventional coding apparatus codes the input pattern by referencing the reference pattern. On the other hand, the above example codes, not the input pattern, but the error map containing the difference between the input pattern and the reference pattern when the matching determination result is a matched condition. This results in coding an image having a high ratio of white picture elements to black picture elements, thus increasing the prediction hit ratio.

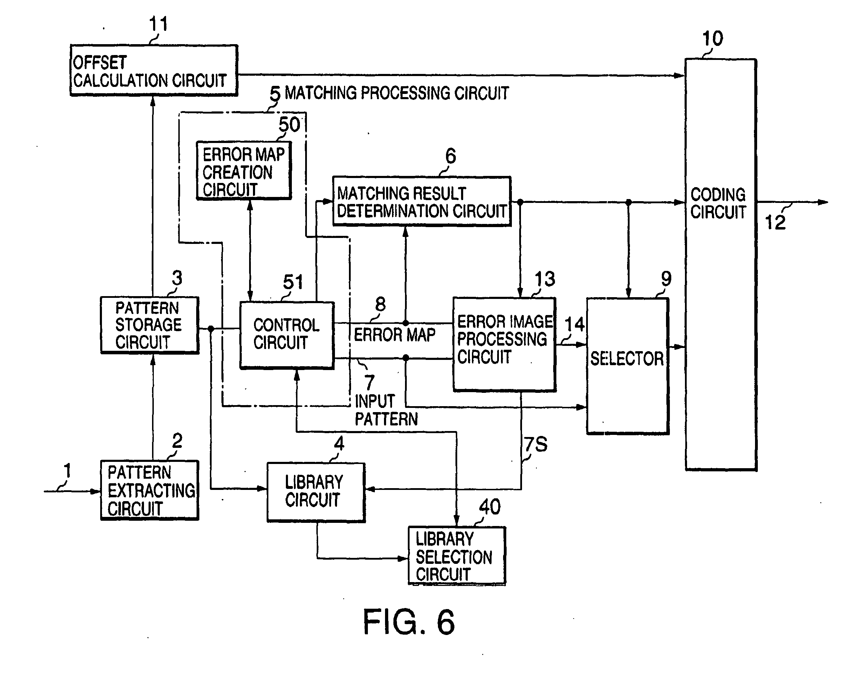

The following describes an embodiment of the present invention with reference to FIG. 6.

Referring to FIG. 6, an error image processing circuit 13 is provided between the matching processing circuit 5 and the selector 9. This configuration is intended for lossy pattern coding, that is, distorted coding. Lossy coding, which is irreversible, allows intentional changes to be introduced into an image.

An error map generated by the error map creation circuit 50 is sent from the matching processing circuit 5 to the matching result determination circuit 6 to determine if the two patterns match. In this case, if the library selection circuit 40 selects from the library circuit 4 a pattern approximately equal in size and if the matching result determination circuit 6 determines that the input pattern matches the reference pattern according to the criteria described above, then the error image processing circuit 13 changes the input pattern 7 as follows.

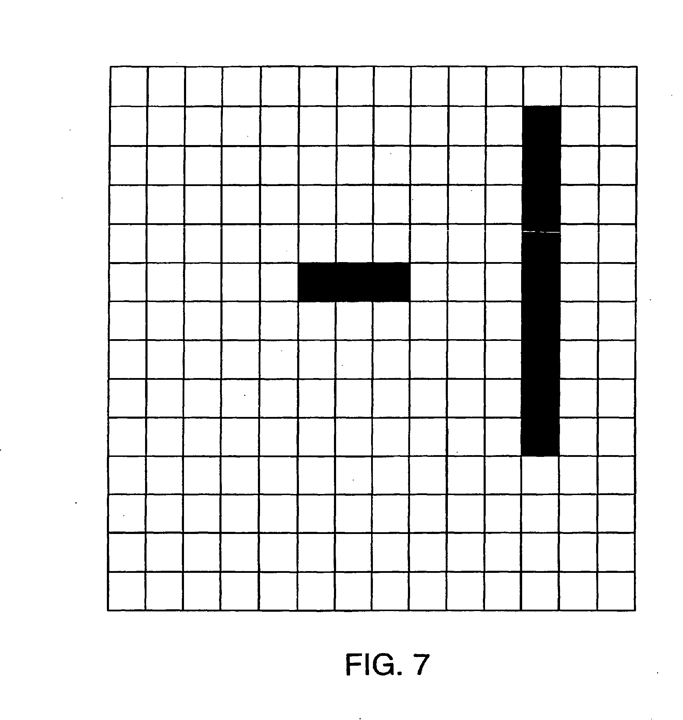

First, the error image processing circuit 13 searches for one isolated black picture element and for two isolated black picture elements among the error map 8. Then, the error image processing circuit 13 changes the isolated black picture elements to white picture elements in the input pattern 7 and in the error map 8. The changed input pattern 7 is added from the error image processing circuit 13 to the library circuit 4 as a new reference data when the matching result determination circuit 6 determines that the input pattern do not match the reference pattern. On the other hand, the changed error map 7S is sent from the error image processing circuit 13 via the selector 9 to the coding circuit 10 for coding. The changed error map 7S is sent regardless of the matching result of the matching result determination circuit 6. FIG. 7 shows the error map that has been changed from the one shown in FIG. 5.

The coder performs the operation as described above in this embodiment.

In this embodiment, the error image processing circuit 13 changes some of error picture elements (black picture elements) to white picture elements in the error map. More white picture elements in the error map allow the coding circuit 10 to perform arithmetic coding more efficiently and increases the picture element hit ratio, resulting in a compression efficiency higher than that achieved by the configuration shown in FIG. 2.

In Fig. 2 and Fig. 6, the pattern extracting circuit 2, matching processing circuit 5, matching result determination circuit 6, selector 9, coding circuit 10, offset calculation circuit 11, error image processing circuit 13, and library selection circuit 40 can be constructed by a computer processing circuit having a CPU and a program memory.

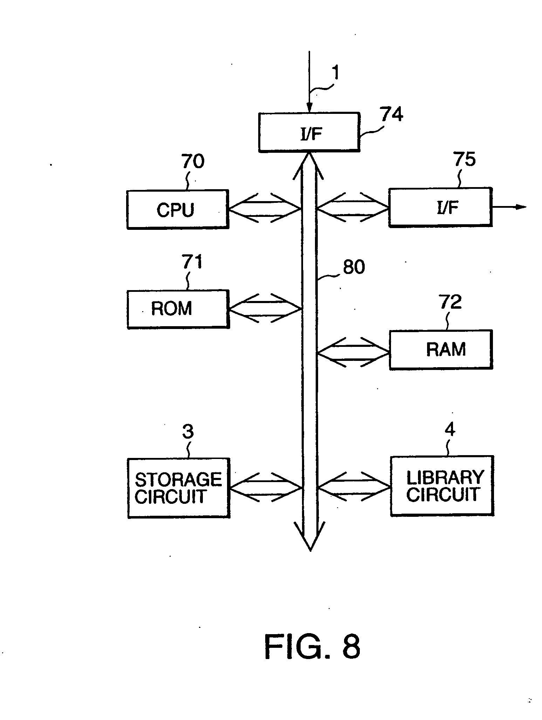

Fig. 8 shows the image coding apparatus of another example. In Fig. 8, a CPU (central processing unit) 70, ROM (read only memory) 71 and RAM (random access memory) 72 constructs the computer processing circuit described above. Interfaces 74, 75, the storage circuit 3 and the library circuit 4 are connected to a bus 80 connected to the CPU 70. The ROM 71 stores a computer program for causing the CPU 70 to process the following performance:
(1)Extracting the input pattern from input image 1 received from an input/output interface 74 and storing it to the storage circuit 3;
(2)Generating an error map containing differences between the input pattern stored in the storage circuit 3 and a reference pattern stored in the library circuit 4 and storing the error map to the RAM 72;
(3)Determining a matching condition between the input pattern and the reference pattern and generating a matching determination result indicating whether the input pattern and the reference pattern match; and
(4)When the matching determination result indicates a matched result, coding the error map stored in the RAM 72 and, when the matching determination result indicates an unmatched result, coding the input pattern stored in the storage circuit 3, and outputting the coded signal to the interface 75. The interface 75 transmits the coded signal to a communication line.

The processes of coding error image and the input pattern can be performed at a coding circuit (not shown in Fig. 8) which is independent from the CPU 70. The operation of the coding circuit is similar to the coding circuit 10 in Fig. 2 and Fig. 5.

As described above, the present invention increases the compression efficiency of an input pattern having a matching reference pattern. This also means an improvement in the compression efficiency of the whole image.

The reason lies in the way an input pattern having a matching reference pattern is coded. The conventional coding apparatus codes the input pattern by referencing the reference pattern. On the other hand, the embodiment according to the present invention codes, not the input pattern, but the error map containing the difference between the input pattern and the reference pattern. This results in coding an image having a high ratio of white picture elements to black picture elements, thus increasing the prediction hit ratio.

The invention may be embodied in other specific forms without departing from the essential characteristics thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An image coding apparatus comprising:
pattern extracting circuit (2) for extracting an input pattern (7) from input image signals (1);
reference pattern generating circuit (4,51) for generating a reference pattern to be compared with said input pattern extracted by said pattern extracting circuit (2);
error image generating circuit (50) for generating an error image containing differences between said input pattern (7) extracted by said pattern extracting circuit (2) and said reference pattern generated by said reference pattern generating circuit, wherein a picture element at a position within the error image is black if a difference exists and white otherwise ;
matching circuit (6) for detecting a matching condition between said input pattern and said reference pattern based on said error image and for generating a matching determination result indicating whether the input pattern and the reference pattern match;
image changing circuit (13) for generating a changed image by changing said input pattern when said matching determination result indicates a matched result; and
coding circuit (10) for coding said changed image when said matching determination result indicates the matched result and for coding said input pattern when said matching determination result indicates an unmatched result,
**characterized in that** said image changing circuit (13) is adapted to detect one isolated black picture element and two isolated black picture elements in said error image and, if there are such isolated black picture elements, changes the isolated black picture elements to white picture elements in the input pattern and in the error image.

## Patentansprüche

1. Bildcodierungsvorrichtung mit:
einer Musterextraktionsschaltung (2) zum Extrahieren eines Eingangsmusters (7) von Eingangsbildsignalen (1);
einer Referenzmustererzeugungsschaltung (4, 51) zum Erzeugen eines mit dem durch die Musterextraktionsschaltung. (2) extrahierten Eingangsmuster zu vergleichenden Referenzmusters;
einer Fehlerbilderzeugungsschaltung (50) zum Erzeugen eines Fehlerbildes, das eine Differenz zwischen dem durch die Musterextraktionsschaltung (2) extrahierten Eingangsmuster (7) und dem durch die Referenzmustererzeugungsschaltung erzeugten Referenzmuster enthält, wobei ein Bildelement an einer Position innerhalb des Fehlerbildes, wenn eine Differenz vorhanden ist, schwarz und andernfalls weiß ist;
einer Vergleichsschaltung (6) zum Erfassen eines Übereinstimmungszustands zwischen dem Eingangsmuster und dem Referenzmuster basierend auf dem Fehlerbild und zum Erzeugen eines Vergleichsergebnisses, das anzeigt, ob das Eingangsmuster und das Referenzmuster übereinstimmen;
einer Bildänderungsschaltung (13) zum Erzeugen eines geänderten Bildes durch Ändern des Eingangsmusters, wenn das Vergleichsergebnis einen Übereinstimmungszustand darstellt; und
einer Codierschaltung (10) zum Codieren des geänderten Bildes, wenn das Vergleichsergebnis einen Übereinstimmungszustand darstellt, und zum Codieren des Eingangsmusters, wenn das Vergleichsergebnis einen Nichtübereinstimmungszustand darstellt;
**dadurch gekennzeichnet, dass**
die Bildänderungsschaltung (13) dazu geeignet ist, ein isoliertes schwarzes Bildelement und zwei isolierte schwarze Bildelemente im Fehlerbild zu erfassen, und, wenn derartige isolierte schwarze Bildelemente existieren, die isolierten schwarzen Bildelemente im Eingangsmuster und im Fehlerbild in weiße Bildelemente umzuwandeln.

## Revendications

1. Appareil de codage d'image, comprenant:
un circuit d'extraction de motif (2) pour extraire un motif d'entrée (7) à partir de signaux d'image d'entrée (1) ;
un circuit de génération de motif de référence (4, 51) pour générer un motif de référence à comparer avec ledit motif d'entrée extrait par ledit circuit d'extraction de motif (2) ;
circuit de génération d'image d'erreur (50) pour générer une image d'erreur contenant des différences entre ledit motif d'entrée (7) extrait par ledit circuit d'extraction de motif (2) et ledit motif de référence généré par ledit circuit de génération de motif de référence (1) ;
dans lequel un élément d'image dans une position à l'intérieur de l'image d'erreur est noir s'il existe une différence et blanc sinon ;
un circuit de mise en correspondance (6) pour détecter un état de mise en correspondance entre ledit motif d'entrée et ledit motif de référence sur la base de ladite image d'erreur et pour générer un résultat de détermination de mise en correspondance indiquant si le motif d'entrée et le motif de référence correspondent ;
un circuit de modification d'image (13) pour générer une image modifiée en modifiant ledit motif d'entrée lorsque ledit résultat de détermination de mise en correspondance indique un résultat mis en correspondance ; et
un circuit de codage (10) pour coder ladite image modifiée lorsque ledit résultat de détermination de mise en correspondance indique le résultat mis en correspondance et pour coder ledit motif d'entrée lorsque ledit résultat de détermination de mise en correspondance indique un résultat non mis en correspondance ;
**caractérisé en ce que**
ledit circuit de modification d'image (13) est adapté pour détecter un élément d'image noir isolé et deux éléments d'image noirs isolés sur ladite image d'erreur, et s'il existe de tels éléments d'image noirs isolés, modifier les éléments d'image noirs isolés en éléments d'image blancs dans le motif d'entrée et sur l'image d'erreur.
